# EUROPÄISCHE PATENTSCHRIFT

(11) **EP 3 359 412 B1**
(45) Veröffentlichungstag und Bekanntmachung des Hinweises auf die Patenterteilung: **06.11.2019**
(21) Anmeldenummer: 16785108.8
(22) Anmeldetag: 30.09.2016
(51) Int. Cl.: B60L 53/16, B60L 53/30, B60L 53/35, B60L 53/36, B60L 5/40, B60L 5/36

(54) **SCHNELLLADESYSTEM UND VERFAHREN ZUR ELEKTRISCHEN VERBINDUNG EINES FAHRZEUGS MIT EINER LADESTATION**
RAPID CHARGING SYSTEM AND METHOD FOR ELECTRICAL CONNECTION OF A VEHICLE TO A CHARGING STATION
SYSTÈME DE CHARGE RAPIDE ET PROCÉDÉ POUR LA LIAISON ÉLECTRIQUE D'UN VÉHICULE À UN POSTE DE CHARGE

(30) Priorität: 07.10.2015 DE 102015219438
(43) Veröffentlichungstag der Anmeldung: 15.08.2018
(73) Patentinhaber: Schunk Bahn- und Industrietechnik GmbH, 35435 Wettenberg (DE)
(72) Erfinder: WEIGEL, Wilfried, 35232 Dautphetal (DE); DOMES, Matthias, 61231 Bad Nauheim (DE); GAMSJÄGER, Tobias, 5020 Salzburg (AT); STAUBACH, Timo, 36358 Herbstein (DE)
(74) Vertreter: advotec.
(86) Internationale Anmeldenummer: PCT/EP2016/073447
(87) Internationale Veröffentlichungsnummer: WO 2017/060172

(56) Entgegenhaltungen:
- WO-A1-2014/112926
- WO-A1-2015/018887
- WO-A1-2015/068221
- DE-T2- 69 601 505
- US-A1- 2013 076 902

## Beschreibung

Die Erfindung betrifft ein Schnellladesystem für elektrisch angetriebene Fahrzeuge, insbesondere Elektrobusse oder dergleichen, und ein Verfahren zur Ausbildung einer elektrisch leitenden Verbindung zwischen einem Fahrzeug und einer stationären Ladestation mit einer Kontaktvorrichtung, einer Ladekontaktvorrichtung und einer Positioniervorrichtung, wobei die Kontaktvorrichtung oder die Ladekontaktvorrichtung an einem Fahrzeug anordbar ist, wobei mit der Kontaktvorrichtung die Ladekontaktvorrichtung in einer Kontaktposition elektrisch kontaktierbar ist, wobei mittels der Positioniervorrichtung die Kontaktvorrichtung relativ zur Ladekontaktvorrichtung in vertikaler und horizontaler Richtung positionierbar und in die Kontaktposition bringbar ist, wobei die Kontaktvorrichtung einen Kontaktelementträger mit Kontaktelementen aufweist, wobei die Kontaktelemente in der Kontaktposition mit Ladekontaktelementen der Ladekontaktvorrichtung jeweils zur Ausbildung von Kontaktpaarungen elektrisch kontaktierbar sind, wobei das Schnellladesystem eine Führungsvorrichtung zur Führung der Kontaktvorrichtung oder der Ladekontaktvorrichtung in die Kontaktposition aufweist, wobei die Führungsvorrichtung so ausgebildet ist, dass bei einem Zusammenführen von Kontaktvorrichtung und Ladekontaktvorrichtung ein Berührungskontakt der Kontaktelemente mit der Ladekontaktvorrichtung vor einem Erreichen der Kontaktposition unterbunden wird, wobei die Führungsvorrichtung eine an der Kontaktvorrichtung und/oder der Ladekontaktvorrichtung angeordnete Abstandseinrichtung aufweist.

Derartige Schnellladesysteme bzw. Kontaktvorrichtungen, Ladekontaktvorrichtungen bzw. Verfahren sind bereits aus dem Stand der Technik bekannt und werden regelmäßig zur Schnellladung elektrisch angetriebener Fahrzeuge an einer Haltestelle bzw. einem Haltepunkt eingesetzt. Im Nahverkehr eingesetzte elektrisch angetriebene Fahrzeuge, wie beispielsweise Busse, können unter anderem über eine Oberleitung kontinuierlich mit elektrischer Energie versorgt werden. Um die Vorteile eines elektrischen Antriebs auch ohne ein Oberleitungsnetz nutzen zu können, ist es bekannt, öffentliche Verkehrsmittel mit Batterien oder auch anderen Arten von Energiespeichern auszustatten. Ein Dauerbetrieb des Verkehrsmittels kann jedoch nur dann gewährleistet werden, wenn während eines Halts des Verkehrsmittels an einer Haltestelle eine Schnellladung der Batterien erfolgt. Hier sind aus dem Stand der Technik verschiedene Schnellladesysteme zur Herstellung einer elektrisch leitenden Verbindung zwischen einer stationären Ladestation im Bereich einer Haltestelle und einem Fahrzeug bzw. Elektrobus bekannt. So kann an einem Elektrobus ein sogenannter Stromabnehmer mit einer Schleifleiste auf einem Dach eines Elektrobusses angeordnet sein, wobei im Bereich der Haltestelle eine in Fahrtrichtung des Elektrobusses längs verlaufende Schiene über einer Fahrbahn aufgehängt ist. Bei einem Halt des Elektrobusses an der Haltestelle wird der Stromabnehmer von dem Dach des Busses nach oben an die Schiene bewegt, wodurch eine elektrische Verbindung für die Dauer des vorgesehenen Halts des Elektrobusses an der Haltestelle hergestellt wird, sodass in diesem Zeitraum eine Schnellladung erfolgen kann. Insbesondere sind jedoch zwei voneinander unabhängige Stromabnehmer und entsprechende Kontaktierbereiche an der Schiene erforderlich, um einen Ladestromkreis ausbilden zu können.

Weiter können Kontaktelemente für beispielsweise eine Steuerleitung, Erdung oder eine Datenübertragung erforderlich sein. Es werden dann an einer Kontaktvorrichtung eines Stromabnehmers bzw. Schnellladesystems mehrere Kontaktelemente angeordnet, die mit einer entsprechenden Anzahl in Fahrtrichtung des Elektrobusses angeordneter Ladekontaktelementen, die beispielsweise als parallele Schienen ausgebildet sein können, kontaktiert werden können. Eine größere Anzahl von Kontaktpaarungen kann somit gleichzeitig hergestellt werden. Insbesondere können so zusätzlich ausgebildete elektrische Verbindungsleitungen zwischen der stationären Ladestation und dem Fahrzeug, beispielsweise zur Steuerung und Überwachung eines Ladevorgangs, genutzt werden.

Bei einem bekannten Schnellladesystem wird eine Ladekontaktvorrichtung an der stationären Ladestation in Richtung eines Daches eines Elektrobusses abgesenkt. Die Ladekontaktvorrichtung wird dann zunächst mit dem Dach des Elektrobusses in Kontakt gebracht, wobei der Elektrobus danach relativ zur Ladekontaktvorrichtung in Fahrtrichtung so positioniert wird, dass die Ladekontaktvorrichtung an eine auf dem Dach angeordnete Schiene einer Kontaktvorrichtung geführt wird. Die Schiene ist dann mit entsprechenden Kontakten zur Herstellung einer elektrischen Verbindung versehen. Hier ist es insbesondere nachteilig, dass die Ladekontaktvorrichtung an der Schiene bzw. dem Dach des Elektrobusses entlang gleitet, bis sie zu den entsprechenden Kontakten der Kontaktvorrichtung gelangt. Durch die wiederholte Führung der Kontaktvorrichtung an der Schiene in die Kontaktposition kommt es zu einem nicht unerheblichen Verschleiß durch Reibung, der darüber hinaus durch unzuträgliche Witterungsbedingungen und Verschmutzungen noch weiter begünstigt wird.

Bei einem weiteren bekannten Schnellladesystem wird eine dachförmige Ladekontaktvorrichtung von einer übereinstimmend ausgebildeten Kontaktvorrichtung kontaktiert. Die Kontaktvorrichtung wird dadurch in eine Kontaktposition geführt, dass Kontaktelemente in der Kontaktvorrichtung an den dachförmigen Schrägen der Ladekontaktvorrichtung entlang gleiten können, derart, dass die Kontaktvorrichtung in der Ladekontaktvorrichtung zentriert wird. Dadurch, dass die Kontaktelemente an den dachförmigen Schrägen der Ladekontaktvorrichtung entlang geführt werden, bevor die Kontaktposition erreicht wird, kommt es ebenfalls zu einem unerwünschten Abrieb der Kontaktelemente bzw. einer Oberfläche der Ladekontaktvorrichtung, sodass auch hier die Kontaktelemente in Folge eines häufigen Berührungskontaktes mit der Ladekontaktvorrichtung in regelmäßigen Abständen ausgetauscht werden müssen, um eine verlässliche Kontaktierung zu ermöglichen.

Ein zielgenaues Einführen der Kontaktvorrichtung relativ zur Ladekontaktvorrichtung in die Kontaktposition ist eher zufällig. Insbesondere in Abhängigkeit einer Zuladung des Elektrobusses kann der Elektrobus relativ zur Ladekontaktvorrichtung bei einem Halt tiefer oder höher positioniert sein. Auch bei einem Absenken des Elektrobusses auf der Einstiegsseite, um so den Fahrgästen das Einsteigen zu erleichtern, kommt es zu einem Verschieben der Kontaktvorrichtung bzw. der Kontaktelemente relativ zu der Ladekontaktvorrichtung, sodass ein elektrischer Kontakt auch unterbrochen werden kann. Werden parallele Schienen verwendet, ist es im Übrigen auch erforderlich, den Elektrobus in einem dafür vorgesehen Bereich der Haltestelle relativ genau zu positionieren. Eine von einer vorgesehenen Position des Elektrobusses abweichende Position sowie einseitiges, seitliches Absenken des Elektrobusses können eine erfolgreiche Kontaktierung bzw. Verbindung von Fahrzeug und stationärer Ladestation verhindern und birgt ein erhebliches Gefahrenpotential. So kann es zur unbeabsichtigten Kontaktierung bzw. Verbindung von Leitern oder auch zu Kurzschlüssen kommen, welche Bauelemente des Schnellladesystems oder auch in der Nähe befindliche Personen schädigen können.

Aus der US 2013/0076902 A1 ist ein Schnellladesystem für elektrisch angetriebene Fahrzeuge bekannt, wobei an einem elektrisch angetriebenen Pkw eine Kontaktvorrichtung in Form eines Steckers und an einer stationären Ladestation eine Ladekontaktvorrichtung in Form einer Steckdose angeordnet sind. Die Ladekontaktvorrichtung ist an einem Roboterarm angeordnet, über den die Ladekontaktvorrichtung in die Kontaktposition gebracht beziehungsweise der Stecker mit der Steckdose verbunden werden kann. Die Kontaktelemente der Kontaktvorrichtung sind bolzenförmig und die Ladekontaktelemente der Ladekontaktvorrichtung hülsenförmig ausgebildet, sodass die bolzenförmigen Kontaktelemente in die hülsenförmigen Ladekontaktelemente eingeführt werden können. Die Ladekontaktvorrichtung umfasst weiter eine Führungsvorrichtung, die in Art eines Trichters mit einer Schräge ausgebildet ist. Weiter sind jeweils an der Ladekontaktvorrichtung und der Kontaktvorrichtung kreisringförmige Wandungen ausgebildet, die die Kontaktelemente und die Ladekontaktelemente jeweils überragen und die ineinander greifen. Bei einem Zusammenführen der Ladekontaktvorrichtung mit der Kontaktvorrichtung kann die kreisringförmige Wandung der Kontaktvorrichtung mit der Führungsvorrichtung in Kontakt gelangen und aufgrund der trichterförmigen Schräge der Führungsvorrichtung in die Kontaktposition geleitet werden. Insbesondere aufgrund der jeweils ausgebildeten kreisringförmigen Wandungen wird vor einem Erreichen der Kontaktposition jeglicher elektrischer Kontakt unterbunden.

Die WO 2015/068221 A1 beschreibt ein Ladesystem für ein elektrisch angetriebenes Fahrzeug beziehungsweise einen Pkw, wobei mit dem Ladesystem während einer Fahrt des Pkws eine Aufladung desselben erfolgen soll. Seitlich parallel zu dem Pkw ist daher eine Ladestation in Art einer Stromschiene angeordnet, mit der eine an einem schwenkbaren Hebel am Pkw befestigte Kontaktvorrichtung kontaktiert wird. Zur Führung ist die Stromschiene beziehungsweise eine Ladekontaktvorrichtung V-förmig ausgebildet und weist streifenförmige Ladekontaktelemente auf. Die Kontaktvorrichtung kann über Rollen verfügen, die ein Entlanggleiten der Kontaktvorrichtung in der Stromschiene sicherstellen. Die Rollen können auch Kontaktelemente ausbilden oder lediglich zur Führung oder Zentrierung der Kontaktvorrichtung dienen.

DE102013019534A1 beschreibt eine Andrahtvorrichtung für einen Oberleitungsbus. Dabei wird ein v-förmiger Abstandshalter mit einer schienen förmigen Führung in Verbindung gebracht, die in den Abstandhalter eintaucht um die Andrahtvorrichtung zu zentrieren.

WO2015018887A1 beschreibt eine Kontaktvorrichtung für ein Schnellladesystem für einen Elektrobus mit einer Positionierungsvorrichtung um eine Kontaktvorrichtung mit Ladekontakten in Verbindung zu bringen.

Der vorliegenden Erfindung liegt daher die Aufgabe zugrunde, ein Schnellladesystem und ein Verfahren zur Ausbildung einer elektrisch leitenden Verbindung zwischen einem Fahrzeug und einer Ladestation vorzuschlagen, welches einen kostengünstigen Betrieb des Verkehrsmittels und eine sichere Kontaktierung ermöglicht.

Diese Aufgabe wird durch ein Schnellladesystem mit den Merkmalen des Anspruchs 1 und ein Verfahren mit den Merkmalen des Anspruchs 19 gelöst.

Das erfindungsgemäße Schnellladesystem für elektrisch angetriebene Fahrzeuge, insbesondere Elektrobusse oder dergleichen, zur Ausbildung einer elektrisch leitenden Verbindung zwischen einem Fahrzeug und einer stationären Ladestation umfasst eine Kontaktvorrichtung, eine Ladekontaktvorrichtung und eine Positioniervorrichtung, wobei die Kontaktvorrichtung oder die Ladekontaktvorrichtung an einem Fahrzeug anordbar ist, wobei mit der Kontaktvorrichtung die Ladekontaktvorrichtung in einer Kontaktposition elektrisch kontaktierbar ist, wobei mittels der Positioniervorrichtung die Kontaktvorrichtung relativ zur Ladekontaktvorrichtung in vertikaler und horizontaler Richtung positionierbar und in die Kontaktposition bringbar ist, wobei die Kontaktvorrichtung einen Kontaktelementträger mit Kontaktelementen aufweist, wobei die Kontaktelemente in der Kontaktposition mit Ladekontaktelementen der Ladekontaktvorrichtung jeweils zur Ausbildung von Kontaktpaarungen elektrisch kontaktierbar sind, wobei das Schnellladesystem eine Führungsvorrichtung zum Führen der Kontaktvorrichtung oder der Ladekontaktvorrichtung in die Kontaktposition aufweist, wobei die Führungsvorrichtung so ausgebildet ist, dass bei einem Zusammenführen von Kontaktvorrichtung und Ladekontaktvorrichtung ein Berührungskontakt der Kontaktelemente mit der Ladekontaktvorrichtung vor einem Erreichen der Kontaktposition unterbunden wird, wobei die Führungsvorrichtung eine an der Kontaktvorrichtung und/oder der Ladekontaktvorrichtung angeordnete Abstandseinrichtung aufweist, wobei die Abstandseinrichtung einen Abstandshalter mit zumindest einer Rolle aufweist, die an einer Positionierfläche der Kontaktvorrichtung oder einer Anlagefläche der Ladekontaktvorrichtung abwälzen kann.

Mittels der Führungsvorrichtung kann folglich verhindert werden, dass bei einem Zusammenführen von Kontaktvorrichtung und Ladekontaktvorrichtung der Berührungskontakt der Kontaktelemente mit der Ladekontaktvorrichtung vor dem Erreichen der Kontaktposition überhaupt möglich ist. Das bedeutet, dass der Berührungskontakt der Kontaktelemente mit der Ladekontaktvorrichtung erst in der Kontaktposition ausgebildet bzw. hergestellt werden kann. Die Kontaktelemente können somit nicht über größere Strecken an der Ladekontaktvorrichtung bzw. deren Oberfläche entlang gleiten, wodurch ein unerwünschter Abrieb der Kontaktelemente bzw. der Oberfläche der Ladekontaktvorrichtung vermieden wird. Eine Standzeit der Kontaktelemente und der Ladekontaktvorrichtung kann so wesentlich verlängert werden. Auch wird eine sichere Kontaktierung möglich, da Oberflächen der Kontaktelemente und der Ladekontaktvorrichtung nicht wesentlich durch Abrieb verschlissen sind. Dadurch, dass kaum eine Abnutzung der Kontaktelemente und der Ladekontaktvorrichtung erfolgt, können Wartungsintervalle für das Schnellladesystem verlängert und damit das betreffende Verkehrsmittel kostengünstiger betrieben werden. Gleichwohl ist es möglich, dass die Kontaktvorrichtung mit der Ladekontaktvorrichtung zufällig passgenau kontaktiert werden kann, sodass dann die Führungsvorrichtung für diesen einen Fall nicht erforderlich wäre. Da gewöhnlich jedoch bei einem Halt, beispielsweise eines Elektrobusses an einem Haltepunkt, die Kontaktvorrichtung und die Ladekontaktvorrichtung relativ zueinander abweichend von einer erreichbaren Kontaktposition positioniert sind, wird die Führungsvorrichtung das Zusammenführen von Kontaktvorrichtung und Ladekontaktvorrichtung dann vorteilhaft beeinflussen.

Die Kontaktvorrichtung und die Ladekontaktvorrichtung können jeweils eine Hochachse aufweisen, wobei die jeweiligen Hochachsen in der Kontaktposition fluchten können. Die Hochachsen können relativ zu einer Fahrbahn vertikal verlaufen, sodass die Kontaktvorrichtung und die Ladekontaktvorrichtung in vertikaler Richtung zusammengeführt werden können. Prinzipiell ist es jedoch auch möglich, dass die Kontaktvorrichtung und die Ladekontaktvorrichtung in horizontaler Richtung zusammengeführt werden können.

Weiter kann ein Berührungskontakt der Kontaktelemente mit der Ladekontaktvorrichtung unterbunden werden, wenn die jeweiligen Hochachsen abweichend von einer gemeinsamen Flucht positioniert werden. Das heißt, wenn die Hochachsen der Kontaktvorrichtung und der Ladekontaktvorrichtung nicht fluchtend relativ zueinander angeordnet sind, kann der Berührungskontakt auch nicht hergestellt werden. Erst wenn die Führungsvorrichtung die Kontaktvorrichtung und die Ladekontaktvorrichtung relativ zueinander so positioniert bzw. ausgerichtet hat, dass die jeweiligen Hochachsen fluchten bzw. in einer gemeinsamen Flucht liegen, kann der Berührungskontakt hergestellt werden.

Demnach kann die Führungsvorrichtung bei einem Zusammenführen von Kontaktvorrichtung und Ladekontaktvorrichtung die jeweiligen Hochachsen in einer gemeinsamen Flucht positionieren. Dies kann beispielsweise bereits bei einem Zusammenführen von Kontaktvorrichtung und Ladekontaktvorrichtung erfolgen.

Auch können die die Kontaktelemente und/oder die Ladekontaktelemente so ausgebildet sein, dass der Berührungskontakt der Kontaktelemente mit der Ladekontaktvorrichtung unterbunden wird, wenn die jeweiligen Hochachsen um einen Winkel α von > 2°, bevorzugt > 5°, besonders bevorzugt > 10° abweichend von einer gemeinsamen Flucht positioniert sind. Dann kann ein Toleranzbereich geschaffen werden, der eine verhältnismäßig geringe Abweichung bzw. Neigung der Hochachsen relativ zueinander erlaubt, bei der dennoch ein elektrisch leitender Berührungskontakt hergestellt werden kann. Diese Neigung kann sich beispielsweise bei einem Absenken eines Elektrobusses auf einer Einstiegsseite ausbilden. Der Toleranzbereich kann leicht durch eine verhältnismäßig große Ausbildung von Kontaktflächen der Kontaktelemente und/oder von Ladekontaktflächen der Ladekontaktelemente geschaffen werden.

Der Kontaktelementträger kann zwei, vorzugsweise drei Positionierflächen ausbilden, die übereinstimmend mit Anlageflächen der Ladekontaktvorrichtung zur Anlage des Kontaktelementträgers ausgebildet sind. Die Positionierflächen des Kontaktelementträgers können sich dann an die Anlageflächen der Ladekontaktvorrichtung in der Kontaktposition anschmiegen, sodass bei einer Zusammenführung von Kontaktelementträger und Ladekontaktvorrichtung der Kontaktelementträger in seine an der Ladekontaktvorrichtung vorgesehene Position lagerichtig positioniert werden kann, ohne dass eine unerwünschte Verschiebung des Kontaktelementträgers in der Kontaktposition erfolgt. Die Positionierflächen können insbesondere eine Geometrie- bzw. eine Relativanordnung zueinander aufweisen, die mit den Anlageflächen so übereinstimmt, dass ein formschlüssiges Zusammenführen von Kontaktelementträger und Ladekontaktvorrichtung in die definierte Kontaktposition in Art einer Stecker-Dose-Verbindung gewährleistet ist. Dabei können die Positionierflächen und die Anlageflächen so beschaffen sein, dass sie zusammen die Führungsvorrichtung ausbilden.

Erfindungsgemäß weist die Führungsvorrichtung eine Abstandseinrichtung auf, die an der Kontaktvorrichtung und/oder der Ladekontaktvorrichtung angeordnet ist. Die Abstandseinrichtung kann so beschaffen sein, dass die Kontaktelemente nur in der Kontaktposition mit der Ladekontaktvorrichtung in Kontakt gelangen können. Die Abstandseinrichtung kann dabei an der Kontaktvorrichtung, an der Ladekontaktvorrichtung oder jeweils an beiden Vorrichtungen ausgebildet oder angeordnet sein. Die Abstandseinrichtung beabstandet folglich die Kontaktvorrichtung von der Ladekontaktvorrichtung bei einem Zusammenführen so lange, bis die Kontaktposition erreicht ist. Die Abstandseinrichtung kann zwischen einer Positionierfläche des Kontaktelementträgers und einer Anlagefläche der Ladekontaktvorrichtung außerhalb der Kontaktposition angeordnet sein. Wenn die Abstandseinrichtung von einem Element oder einer Form bzw. Gestalt des Kontaktelementträgers oder der Ladekontaktvorrichtung ausgebildet ist, kann die Abstandseinrichtung durchaus mit einer Oberfläche der Ladekontaktvorrichtung oder der Kontaktvorrichtung in Kontakt gelangen, wobei dann durch die Führungsvorrichtung bzw. deren Gestalt sichergestellt ist, dass dies an Bereichen der jeweiligen Oberfläche geschieht, an denen ein Materialabrieb oder eventuelle Beschädigungen ohne Einfluss auf eine Funktion des Schnellladesystems sind.

Erfindungsgemäß weist die Abstandseinrichtung einen Abstandshalter auf, der an einer Positionierfläche der Kontaktvorrichtung oder einer Anlagefläche der Ladekontaktvorrichtung geführt werden kann. Der Abstandshalter kann beispielsweise schon von einem stab- oder kurvenförmigen Element ausgebildet werden, welches den Berührungskontakt der Kontaktelemente außerhalb der Kontaktposition verhindert. Der Abstandshalter kann beispielsweise aus einem kostengünstigen Kunststoffmaterial oder aus einem Material mit guten Gleiteigenschaften, wie beispielsweise PTFE, ausgebildet sein. Der Abstandshalter kann dann beim Zusammenführen von Kontaktelementträger und Ladekontaktvorrichtung an der Positionierfläche bzw. der Anlagefläche entlang gleiten. Die Abstandseinrichtung kann auch eine Mehrzahl von Abstandshaltern umfassen.

Erfindungsgemäß weist der Abstandshalter zumindest eine Rolle auf, die an der Positionierfläche oder der Anlagefläche abwälzen kann. Die Rolle kann an einem distalen Ende des Abstandshalters angeordnet sein. So gelangt die Positionierfläche oder die Anlagefläche alleine mit der Rolle des Abstandshalters in Kontakt, wodurch eine Reibung und damit ein Verschleiß der Führungsvorrichtung wesentlich herabgesetzt werden kann. Auch können an dem Abstandshalter mehrere Rollen angeordnet sein.

Relativ zu einer Längsachse der Kontaktvorrichtung oder der Ladekontaktvorrichtung kann der Abstandshalter sich entlang der Positionierfläche der Kontaktvorrichtung oder der Anlagefläche der Ladekontaktvorrichtung erstrecken bzw. derart ausgebildet sein. Für den Fall, dass die jeweiligen Längsachsen der Kontaktvorrichtung und der Ladekontaktvorrichtung bezogen auf eine Hochachse nicht parallel relativ zueinander angeordnet sind, sondern unter einem Winkel oder sich kreuzend positioniert sind, kann der sich längs ersteckende Abstandshalter dazu genutzt werden, die jeweiligen Längsachsen zunächst parallel zu positionieren, bevor die Kontaktposition erreicht ist. Es können jedoch auch mehrere Abstandshalter entlang der Längsachse der Kontaktvorrichtung oder der Ladekontaktvorrichtung angeordnet bzw. ausgebildet sein.

Die Abstandseinrichtung kann an einem der Ladekontaktvorrichtung zugewandten Ende der Kontaktvorrichtung oder an einem der Kontaktvorrichtung zugewandten Ende der Ladekontaktvorrichtung angeordnet sein. Da das jeweils zugewandte Ende bei einem Zusammenführen erstmalig mit der Kontaktvorrichtung oder der Ladekontaktvorrichtung in Kontakt gelangen kann, ist es vorteilhaft, wenn die Abstandseinrichtung an dem jeweiligen zugewandten Ende angeordnet ist und eine Führung in die Kontaktposition bei einem Zusammenführen von Ladekontaktvorrichtung und Kontaktvorrichtung bewerkstelligen kann. Bei beispielsweise einer spitz zulaufenden Kontaktvorrichtung kann die Abstandseinrichtung an der Spitze der Kontaktvorrichtung angeordnet sein, wobei bei einer dachförmigen Ladekontaktvorrichtung die Abstandseinrichtung im Bereich einer Traufe der Ladekontaktvorrichtung jeweils angeordnet sein kann.

Besonders vorteilhaft ist es, wenn die Ladekontaktvorrichtung und/oder die Kontaktvorrichtung eine Aufnahmeausnehmung der Führungsvorrichtung für die Abstandseinrichtung in der Kontaktposition aufweist. In der Kontaktposition kann dann die Abstandseinrichtung in die Aufnahmeausnehmung eingreifen bzw. in diese hinein geführt sein. Die Abstandseinrichtung muss dann in der Kontaktposition nicht mehr die Ladekontaktvorrichtung von der Kontaktvorrichtung zur Verhinderung eines Berührungskontakts der Kontaktelemente beabstanden. Die Aufnahmeausnehmung kann beispielsweise als eine mittig ausgebildete Nut in einer dachförmigen Ladekontaktvorrichtung ausgebildet sein. Sofern mehrere Abstandseinrichtungen vorgesehen sind, können auch mehrere übereinstimmend ausgebildete Aufnahmeausnehmungen für die jeweiligen Abstandseinrichtungen ausgebildet sein. Beispielsweise kann der Kontaktelementträger im Vergleich zur Ladekontaktvorrichtung schmal ausgebildet sein, sodass Abstandseinrichtungen der Ladekontaktvorrichtung in der Kontaktposition an dem Kontaktelementträger vorbei bzw. neben diesem positioniert sein können. Ein derart seitlich gekürzter Kontaktelementträger bildet dann an seinen Seitenflächen daher auch Aufnahmeausnehmungen aus.

In einer Ausführungsform kann die Kontaktvorrichtung auf einem Fahrzeugdach und die Ladekontaktvorrichtung an einer stationären Ladestation oder umgekehrt angeordnet sein. Beispielsweise kann es sich dabei um ein Fahrzeugdach eines Elektrobusses oder auch eines Straßenbahnwagens handeln. Dabei kann beispielsweise auch vorgesehen sein, die Kontaktvorrichtung so auf dem Fahrzeugdach zu positionieren, dass diese in Fahrtrichtung auf einer Fahrerseite des Fahrzeugdachs angeordnet ist. Einem Fahrer des Fahrzeuges wird so eine Positionierung der Kontaktvorrichtung unterhalb einer Ladekontaktvorrichtung wesentlich vereinfacht, da diese bzw. deren Lage in Blickrichtung des Fahrers liegt.

Die Ladekontaktvorrichtung kann einen Ladekontaktelementträger mit Ladekontaktelementen aufweisen. Vorteilhaft kann der Ladekontaktelementträger aus einem Kunststoffmaterial ausgebildet sein. Die Ladekontaktvorrichtung ist dann besonders kostengünstig und einfach herstellbar. So kann der Ladekontaktelementträger auch aus Kunststoff einstückig ausgebildet sein. Die Ladekontaktelemente können dann in den Ladekontaktelementträger bzw. in dafür vorgesehene Halterungen oder Ausnehmungen leicht eingesetzt werden.

Der Ladekontaktelementträger kann eine Aufnahmeöffnung für den Kontaktelementträger ausbilden, wobei der Kontaktelementträger in die Aufnahmeöffnung des Ladekontaktelementträgers einsetzbar sein kann. Dabei kann die Aufnahmeöffnung vorzugsweise V-förmig ausgebildet sein. Bei einer Relativabweichung des Kontaktelementträgers bei einem Zusammenführen von Kontaktvorrichtung und Ladekontaktvorrichtung zur Aufnahmeöffnung bewirkt dann die V-förmige Ausbildung der Aufnahmeöffnung eine Zentrierung des Kontaktelementträgers.

So kann die Aufnahmeöffnung bei einem Zusammenführen von Kontaktelementträger und Ladekontaktelementträger eine Führung für den Kontaktelementträger ausbilden. Eventuelle Lageabweichungen des Fahrzeugs bei einem Halt an einer Haltestelle von einer vorgesehenen Halteposition können so durch die durch die Aufnahmeöffnung bewirkte Führung des Kontaktelementträgers in eine Kontaktposition an der Ladekontaktvorrichtung leicht ausgeglichen werden. Die Führung erfolgt stets mittels der Führungsvorrichtung für den Fall, dass die Kontaktposition noch nicht erreicht ist.

Weiter kann der Ladekontaktelementträger als eine in einer Fahrtrichtung des Fahrzeugs anordbare, dachförmige Längsschiene ausgebildet sein, wobei die Ladekontaktelemente als Leiterstreifen ausgebildet sein können. Die Ladekontaktelemente können dann an einer Unterseite der dachförmigen Längsschiene angeordnet sein, sodass die Ladekontaktelemente nicht unmittelbar Witterungseinflüssen ausgesetzt sind. Auch kann die dachförmige Längsschiene vergleichsweise lang ausgebildet sein, sodass eine genaue Positionierung des Fahrzeugs an einer Haltestelle nicht mehr notwendig ist. Auch kann die dachförmige Längsschiene an ihren Enden vorzugsweise offen ausgebildet sein, sodass der Kontaktelementträger auch in Fahrtrichtung in die dachförmige Längsschiene eingeführt bzw. herausgezogen werden kann. Umgekehrt kann die dachförmige Längsschiene auf einem Fahrzeugdach so angeordnet sein, dass eine Unterseite der dachförmigen Längsschiene nach oben gekehrt ist. Dann sind zwar die Ladekontaktelemente direkt einer Witterung ausgesetzt, jedoch kann beispielsweise Regenwasser leicht über offene Enden der Längsschiene abgeführt werden.

Die Ladekontaktelemente können vorteilhaft als ein Leiterstreifen ausgebildet sein, sodass die Ladekontaktelemente dann eine vergleichsweise große, kontaktierbare Fläche für die Kontaktelemente ausbilden. Auch ist der Leiterstreifen einfach herzustellen, beispielsweise durch die Verwendung eines Halbzeugs als Leiterstreifen. Umgekehrt ist es auch möglich, die Kontaktelemente am Kontaktelementträger als Leiterstreifen auszubilden und die Ladekontaktelemente mit Kontaktelementen auszubilden.

Die Kontaktelemente können bolzenförmig ausgebildet sein, wobei die Kontaktelemente am Kontaktelementträger federnd gelagert sein können. Die Kontaktelemente sind so besonders einfach herstellbar, wobei die federnde Lagerung durch eine einfache Druckfeder innerhalb eines Kontaktelements ausgeführt werden kann. Infolgedessen kann so ein punktueller Kontakt mit einem Ladekontaktelement der Ladekontaktvorrichtung unter einer Federvorspannung ausgebildet werden. Weiter kann es auch vorgesehen sein, dass, beispielsweise für eine Leistungskontaktpaarung, eine Mehrzahl von Kontaktelementen vorgesehen ist. Dies ist insbesondere dann sinnvoll, wenn die Ladekontaktelemente der Ladekontaktvorrichtung vergleichsweise großflächig ausgebildet sind, sodass über die bolzenförmigen Kontaktelemente dann ein größerer Strom sicher übertragen werden kann. Vorzugsweise können zwei Kontaktelemente für jeweils eine Phase bzw. einen Leistungskontakt vorgesehen sein. Dabei kann es abweichend von den zuvor beschriebenen Ausführungsformen auch vorgesehen sein, die Kontaktelemente am Kontaktelementträger nicht bolzenförmig auszuführen, sondern die Ladekontaktvorrichtung mit bolzenförmigen Ladekontaktelementen auszustatten und umgekehrt.

Die Positioniervorrichtung kann einen Pantografen oder eine Schwinge umfassen, mittels dem bzw. der die Kontaktvorrichtung in vertikaler Richtung relativ zur Ladekontaktvorrichtung bzw. zu dem Fahrzeug positioniert werden kann. Bei einer Schwinge kann ein ergänzendes Koppelgetriebe vorgesehen sein, welches die Kontaktvorrichtung relativ zur Ladekontaktvorrichtung stabilisiert bzw. in der betreffenden Richtung ausrichtet. Ein Pantograf oder eine Schwinge bzw. ein entsprechender mechanischer Antrieb ist besonders einfach und kostengünstig herstellbar.

Die Positioniervorrichtung kann eine Querführung aufweisen, mittels der der Kontaktelementträger relativ quer zur Ladekontaktvorrichtung positionierbar ist, wobei der Kontaktelementträger frei verschieblich an der Querführung angeordnet sein kann. Die Querführung kann wahlweise an einem Fahrzeug oder an einem Pantografen oder einer Schwinge der Positioniervorrichtung angeordnet sein. In beiden Fällen kann dann die Positioniervorrichtung bzw. ein an der Positioniervorrichtung anordbarer Kontaktelementträger quer zur Fahrtrichtung des Fahrzeugs verschiebbar sein. Durch diese Verschiebbarkeit kann beispielsweise eine fehlerhafte Positionierung des Fahrzeugs an einer Haltestelle quer zur Fahrtrichtung ausgeglichen werden. Darüber hinaus können eventuelle Fahrzeugbewegungen in Folge eines einseitigen Absinkens des Fahrzeugs zum Ein- und Aussteigen von Personen so ausgeglichen werden, dass es zu keiner Verschiebung des Kontaktelementträgers relativ zur Ladekontaktvorrichtung in Querrichtung kommen kann.

Die Querführung kann an einem distalen Ende eines Pantografen oder einer Schwinge angeordnet sein. Dadurch ist es nicht mehr erforderlich, dass die Schwinge bzw. der Pantograf quer zur Fahrtrichtung bewegt wird, sondern es ist ausreichend, allein den Kontaktelementträger an der Querführung zu bewegen. Dadurch verringert sich eine zu bewegende Masse. Auch wird dann ein geringeres Drehmoment bzw. keine wesentlichen Querkräfte mehr auf einen Pantografen oder eine Schwinge ausgeübt. Vorzugsweise kann die Querführung an einem distalen, oberen Ende des Pantografen oder der Schwinge unmittelbar fest montiert sein, sodass der Kontaktelementträger dann an der Querführung bewegt werden kann. Die Querführung kann als eine geradförmige Linearführung oder auch als eine bogenförmige Linearführung ausgebildet sein. Die bogenförmige Linearführung kann dann einen Radius eines Bogens aufweisen, der einer Höhe der Querführung über einem Fahrweg entspricht. Optional kann auch vorgesehen sein, anstelle des Kontaktelementträgers die Ladekontaktvorrichtung an der Querführung anzuordnen.

Bei dem erfindungsgemäßen Verfahren zur Ausbildung einer elektrisch leitenden Verbindung zwischen einem Fahrzeug und einer stationären Ladestation, insbesondere für ein Schnellladesystem für elektrisch angetriebene Fahrzeuge, wie Elektrobusse oder dergleichen, mit einer Kontaktvorrichtung, einer Ladekontaktvorrichtung und einer Positioniervorrichtung, wird mit der Kontaktvorrichtung die Ladekontaktvorrichtung in einer Kontaktposition elektrisch kontaktiert, wobei mittels der Positioniervorrichtung die Kontaktvorrichtung relativ zur Ladekontaktvorrichtung in vertikaler und horizontaler Richtung positioniert und in die Kontaktposition gebracht wird, wobei Kontaktelemente eines Kontaktelementträgers der Kontaktvorrichtung in der Kontaktposition mit Ladekontaktelementen der Ladekontaktvorrichtung jeweils zur Ausbildung von Kontaktpaarungen elektrisch kontaktiert werden, wobei eine Führungsvorrichtung des Schnellladesystems die Kontaktvorrichtung oder die Ladekontaktvorrichtung in die Kontaktposition führt, wobei bei einem Zusammenführen von Kontaktvorrichtung und Ladekontaktvorrichtung ein Berührungskontakt der Kontaktelemente mit der Ladekontaktvorrichtung vor einem Erreichen der Kontaktposition mittels der Führungsvorrichtung unterbunden wird, wobei die Führungsvorrichtung eine an der Kontaktvorrichtung und/oder der Ladekontaktvorrichtung angeordnete Abstandseinrichtung aufweist, wobei ein Abstandshalter mit zumindest einer Rolle der Abstandseinrichtung an einer Positionierfläche der Kontaktvorrichtung oder einer Anlagefläche der Ladekontaktvorrichtung abwälzt.

Hinsichtlich der Vorteile des erfindungsgemäßen Verfahrens wird auf die Vorteilsbeschreibung des erfindungsgemäßen Schnellladesystems verwiesen. Weitere vorteilhafte Ausführungsformen des Verfahrens ergeben sich aus den auf den Anspruch 1 jeweils rückbezogenen Unteransprüchen.

Nachfolgend wird eine bevorzugte Ausführungsform der Erfindung unter Bezugnahme auf die beigefügten Zeichnungen näher erläutert.

Es zeigen:
- **Fig. 1:**: eine Ladekontaktvorrichtung eines Schnellladesystems in einer Unteransicht;
- **Fig. 2:**: die Ladekontaktvorrichtung in einer Schnittansicht entlang einer Linie II - II aus **Fig. 1**;
- **Fig. 3**:: eine Kontaktvorrichtung des Schnellladesystems in einer Vorderansicht;
- **Fig. 4:**: die Kontaktvorrichtung in einer Seitenansicht;
- **Fig. 5:**: die Kontaktvorrichtung in einer Schnittansicht entlang einer Linie V-V aus **Fig. 4****;**
- **Fig. 6:**: das Schnellladesystem in einer Querschnittansicht während eines Zusammenführens von Kontaktvorrichtung und Ladekontaktvorrichtung;
- **Fig. 7:**: das Schnellladesystem in einer Querschnittansicht in einer Kontaktposition;
- **Fig. 8:**: das Schnellladesystem in einer Querschnittansicht in einer abweichenden Kontaktposition.

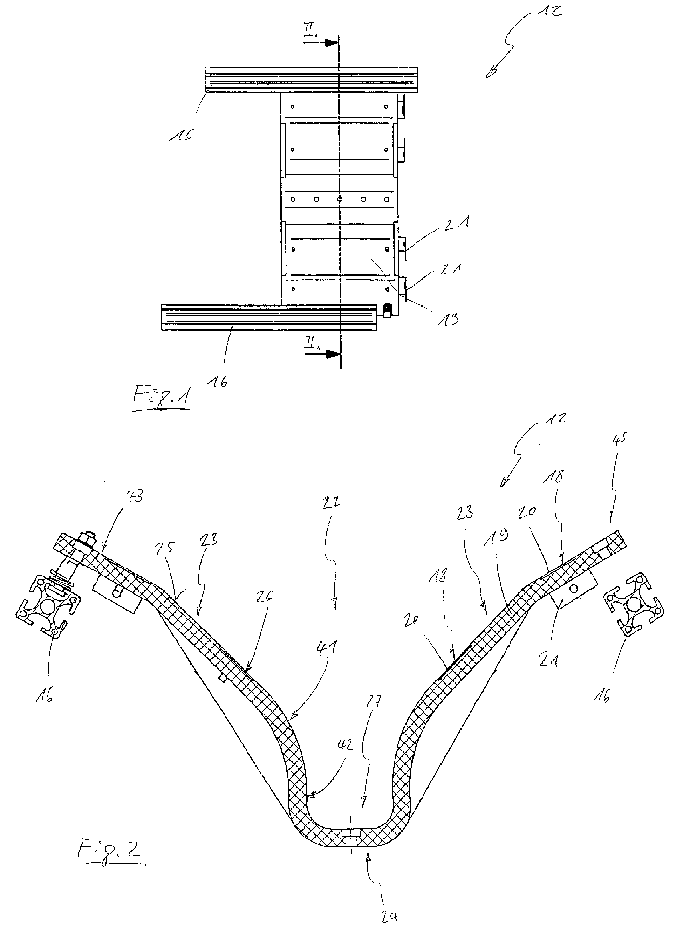

Eine Zusammenschau der **Fig. 1** bis **6** zeigt ein Schnellladesystem 10 bzw. einzelne Darstellungen einer Kontaktvorrichtung 11 und einer Ladekontaktvorrichtung 12. Weiter umfasst das Schnellladesystem 10 eine hier nur teilweise dargestellte Positioniervorrichtung 13. An einem Kontaktelementträger 14 der Kontaktvorrichtung 11 ist ein Verschiebelager 15 einer hier nicht weiter dargestellten Querführung der Positioniervorrichtung 13 angeordnet.

Die Ladekontaktvorrichtung 12 ist in der hier dargestellten Ausführungsform des Schnellladesystems 10 über Montageprofile 16 auf einem nicht dargestellten Dach eines Fahrzeugs bzw. Elektrobusses befestigt. Der Kontaktelementträger 14 ist mittels einer hier nicht näher dargestellten Aufhängeeinrichtung der Positioniervorrichtung 13 oberhalb des Elektrobusses im Bereich einer Haltestelle des Elektrobusses aufgehängt. Die Aufhängeeinrichtung ermöglicht unter anderem eine vertikale Bewegung der Kontaktvorrichtung 11. Folglich kann der Kontaktelementträger 14 der Kontaktvorrichtung 11 relativ zur Ladekontaktvorrichtung 12 mittels der Positioniervorrichtung 13 positioniert werden.

Der Kontaktelementträger 14 umfasst Kontaktelemente 17, die mit Ladekontaktelementen 18 eines Ladekontaktelementträgers 19 der Ladekontaktvorrichtung 12 kontaktiert werden können. Der Ladekontaktelementträger 19 ist im Wesentlichen aus einem Kunststoffmaterial ausgebildet, wobei die Ladekontaktelemente 18 ihrerseits jeweils als Leiterstreifen 20 ausgebildet sind und in einer Längsrichtung des Ladekontaktelementträgers 19 verlaufen. Die Leiterstreifen 20 dienen zur Übertragung eines Ladestroms, wobei die Leiterstreifen 20 jeweils einen Phasenleiter, Schutzleiter oder eine Steuerleitung repräsentieren können. Im Übrigen sind an den Leiterstreifen 20 jeweils Kontaktfahnen 21 zum Anschluss einer hier nicht näher dargestellten Leitung vorgesehen. Eine Aufnahmeöffnung 22 des Ladekontaktelements 18 ist V-förmig ausgebildet, derart, dass zwei symmetrische Schenkel 23 über einen horizontalen Steg 24 verbunden sind. Innerhalb der Aufnahmeöffnung 22 bildet die Ladekontaktvorrichtung 12 Anlageflächen 25 für den Kontaktelementträger 14 aus. Innerhalb der Anlageflächen 25 an den Schenkeln 23 sind jeweils Ausnehmungen 26 zur flächenbündigen Aufnahme der Leiterstreifen 20 ausgebildet. Die Schenkel 23 sind durch den Steg 24 soweit voneinander beabstandet, dass eine Aufnahmeausnehmung 27 ausgebildet wird.

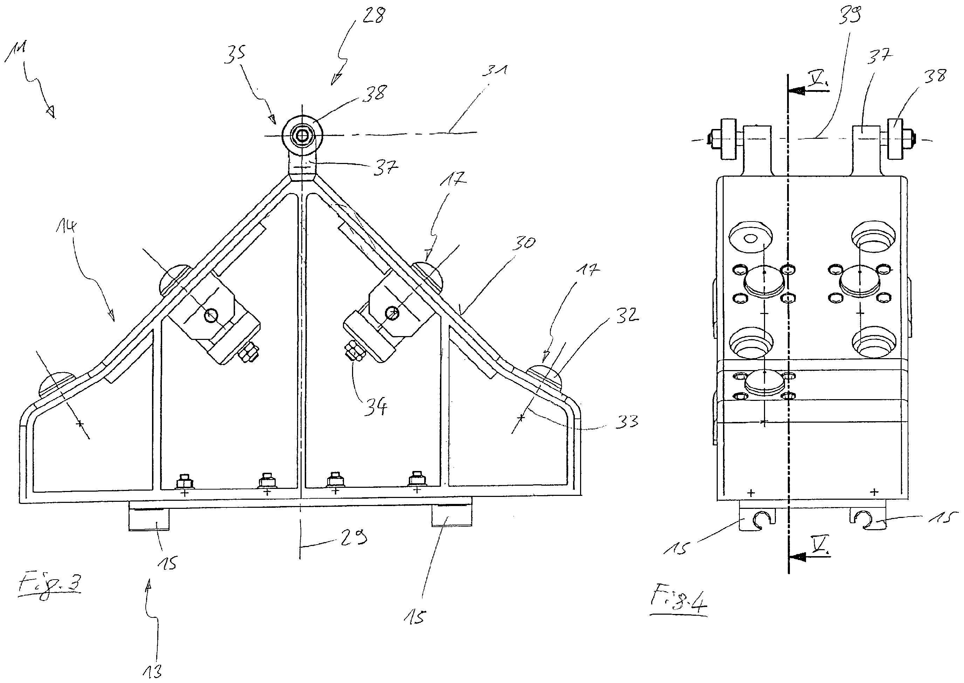

Eine Zusammenschau der **Fig. 3** bis **5** zeigt den Kontaktelementträger 14 in verschiedenen Ansichten. Der Kontaktelementträger 14 ist an einem spitzen Ende 28 relativ bezogen auf eine Hochachse 29 V-förmig in Übereinstimmung mit der Aufnahmeöffnung 22 der Ladekontaktvorrichtung 12 ausgebildet. Zwei Positionierflächen 30 sind relativ zu einer horizontalen Ebene 31 schräg ausgebildet. Die Positionierflächen 30 können folglich an den Anlageflächen 25 in einer Kontaktposition zur Anlage gelangen. Innerhalb der Positionierflächen 30 sind jeweils zwei Kontaktelemente 17 angeordnet, die aus den Positionierflächen 30 herausragen. Die Kontaktelemente 17 weisen jeweils einen Kontaktbolzen 32 auf, der federnd in Richtung einer Längsachse 33 des Kontaktbolzens 32 gelagert ist. In einer hier nicht dargestellten Kontaktposition kommt es zu einer Kontaktpaarung zwischen den Kontaktbolzen 32 und den jeweils zugeordneten Leiterstreifen 20, sodass über die Leiterstreifen 20 und die Kontaktbolzen 32 elektrische Energie übertragen werden kann. An den Kontaktelementen 17 ist jeweils eine Anschlussklemme 34 zum Anschluss einer hier nicht näher dargestellten Leitung vorgesehen.

An dem spitzen Ende 28 des Kontaktelementträgers 14, der aus einem Kunststoffmaterial ausgebildet ist, ist eine Abstandseinrichtung 35 einer Führungsvorrichtung 36 des Schnellladesystems 10 angeordnet. Die Abstandseinrichtung 35 umfasst ein paar Abstandshalter 37 mit jeweils einer Rolle 38. Die Rollen 38 sind folglich entlang einer Längsachse 39 des Kontaktelementträgers 14 angeordnet.

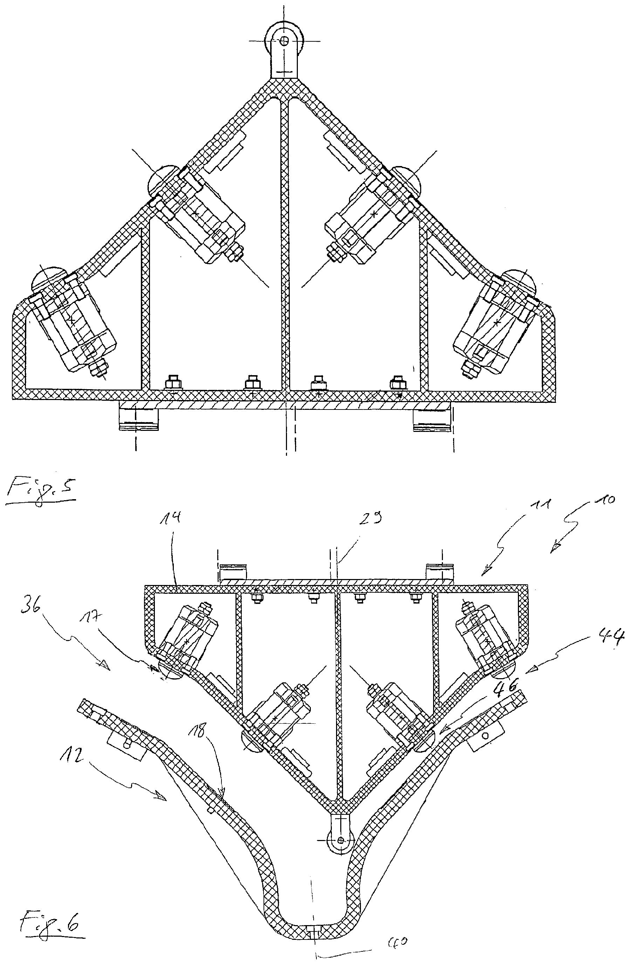

Die **Fig. 6** zeigt ein Zusammenführen von Kontaktvorrichtung 11 mit der Ladekontaktvorrichtung 12, wobei hier die Hochachse 29 in der Kontaktvorrichtung 11 nicht mit einer Hochachse 40 der Ladekontaktvorrichtung 12 fluchtet. Bei dem Zusammenführen von Kontaktvorrichtung 11 mit der Ladekontaktvorrichtung 12 gelangt somit zunächst die Rolle 38 mit der Anlagefläche 25 in Kontakt, so, dass die Kontaktbolzen 32 von der Anlagefläche 25 bzw. den Leiterstreifen 20 über Spalte 44 bzw. 46 beabstandet sind. Bei einem weiteren Zusammenführen der Kontaktvorrichtung 11 mit der Ladekontaktvorrichtung 12 bzw. einer Verringerung eines Abstandes wird der Kontaktelementträger an der hier nicht dargestellten Querführung mit Hilfe der Verschiebelager 15 in Querrichtung verschoben, bis der Abstandshalter 37 mit der Rolle 38 in der Aufnahmeausnehmung 27 aufgenommen ist und die Hochachsen 29 und 40 im Wesentlichen fluchten. In dieser Kontaktposition gelangen dann auch die Kontaktbolzen 32 erstmalig mit der Ladekontaktvorrichtung 12 bzw. den Leiterstreifen 20 in Kontakt, ohne dass die Kontaktbolzen 32 an der Anlagefläche 25 mit einem Berührungskontakt über eine längere Strecke verschoben wurden. Für eine abschließende Zentrierung der Kontaktvorrichtung 11 bzw. des Kontaktelementträgers 14 in der Aufnahmeöffnung 22 sorgen die jeweiligen Positionierflächen 30 und die Anlageflächen 25, die dann aneinander anliegen. Der Abstandshalter 37 mit der Rolle 38 bildet hier zusammen mit der jeweiligen Anlagefläche 25 die Führungsvorrichtung 36 aus.

Zur Verhinderung eines Berührungskontaktes der Kontaktbolzen 32 vor Erreichen der Kontaktposition können die Schenkel 23 einen bogenförmigen Abschnitt 41 aufweisen, über den die Rolle 38 an einen vertikalen Abschnitt 42 des Schenkels 23 überführt wird. Weiter kann an den Schenkeln 23 ein besonders flacher, abgewinkelter Abschnitt 43 ausgebildet sein. Somit wird es möglich, einen vergleichsweise breiten Spalt 44 an einem Ende 45 des Schenkels 23 auszubilden, der einem schmalen Spalt 46 in Richtung der Hochachse 40 folgt, und damit dann auch bei einem Verkippen der Hochachsen 29 und 40 einen Berührungskontakt außerhalb der Kontaktposition zu verhindern.

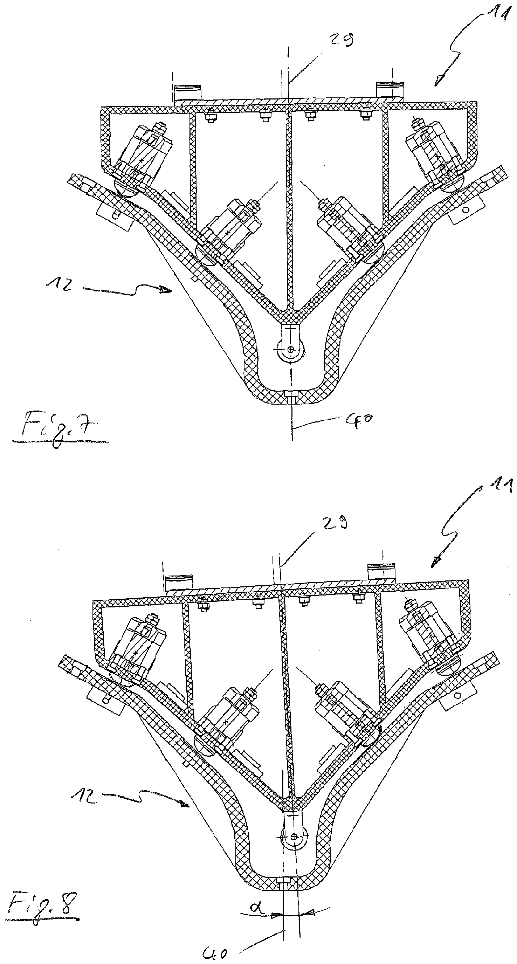

Die **Fig. 7** zeigt die in der Kontaktposition zusammenführte Kontaktvorrichtung 11 mit der Ladekontaktvorrichtung 12, wobei die Hochachsen 29 und 40 im Wesentlichen fluchten.

Die **Fig. 8** zeigt die in einer abweichenden Kontaktposition zusammenführte Kontaktvorrichtung 11 mit der Ladekontaktvorrichtung 12, wobei die Hochachsen 29 und 40 um einen Winkel α abweichend von einer gemeinsamen Flucht relativ zueinander positioniert sind. Dennoch gelangen die Leiterstreifen 20 in elektrisch leitenden Kontakt mit den Kontaktbolzen 32, da die Leiterstreifen 20 ausreichend groß und die Kontaktbolzen 32 federnd gelagert ausgebildet sind und so eine Anpassung an den verhältnismäßig geringen Winkelversatz erfolgen kann.

## Patentansprüche

1. Schnellladesystem (10) für elektrisch angetriebene Fahrzeuge, insbesondere Elektrobusse oder dergleichen, zur Ausbildung einer elektrisch leitenden Verbindung zwischen einem Fahrzeug und einer stationären Ladestation, mit einer Kontaktvorrichtung (11), einer Ladekontaktvorrichtung (12) und einer Positioniervorrichtung (13), wobei die Kontaktvorrichtung (11) oder die Ladekontaktvorrichtung (12) an einem Fahrzeug anordbar ist, wobei mit der Kontaktvorrichtung (11) die Ladekontaktvorrichtung (12) in einer Kontaktposition elektrisch kontaktierbar ist, wobei mittels der Positioniervorrichtung (13) die Kontaktvorrichtung (11) relativ zur Ladekontaktvorrichtung (12) in vertikaler und horizontaler Richtung positionierbar und in die Kontaktposition bringbar ist, wobei die Kontaktvorrichtung (11) einen Kontaktelementträger (14) mit Kontaktelementen (17) aufweist, wobei die Kontaktelemente (17) in der Kontaktposition mit Ladekontaktelementen (18) der Ladekontaktvorrichtung (12) jeweils zur Ausbildung von Kontaktpaarungen elektrisch kontaktierbar sind, wobei das Schnellladesystem (10) eine Führungsvorrichtung (36) zur Führung der Kontaktvorrichtung (11) oder der Ladekontaktvorrichtung (12) in die Kontaktposition aufweist, wobei die Führungsvorrichtung (36) so ausgebildet ist, dass bei einem Zusammenführen von Kontaktvorrichtung (11) und Ladekontaktvorrichtung (12) ein Berührungskontakt der Kontaktelemente (17) mit der Ladekontaktvorrichtung (12) vor einem Erreichen der Kontaktposition unterbunden wird, wobei die Führungsvorrichtung (36) eine an der Kontaktvorrichtung (11) und/oder der Ladekontaktvorrichtung (12) angeordnete Abstandseinrichtung (35) aufweist, **dadurch gekennzeichnet,**
**dass** die Abstandseinrichtung (35) einen Abstandshalter (37) mit zumindest einer Rolle (38) aufweist, die an einer Positionierfläche (30) der Kontaktvorrichtung oder einer Anlagefläche (25) der Ladekontaktvorrichtung (12) abwälzen kann.

2. Schnellladesystem nach Anspruch 1,
**dadurch gekennzeichnet,**
**dass** die Kontaktvorrichtung (11) und die Ladekontaktvorrichtung (12) jeweils eine Hochachse (29, 40) aufweisen, wobei die jeweiligen Hochachsen (29, 40) in der Kontaktposition fluchten.

3. Schnellladesystem nach Anspruch 2,
**dadurch gekennzeichnet,**
**dass** der Berührungskontakt der Kontaktelemente (17) mit der Ladekontaktvorrichtung (12) unterbunden wird, wenn die jeweiligen Hochachsen (29, 40) abweichend von einer gemeinsamen Flucht positioniert sind.

4. Schnellladesystem nach Anspruch 2 oder 3,
**dadurch gekennzeichnet,**
**dass** die Führungsvorrichtung (36) bei einem Zusammenführen von Kontaktvorrichtung (11) und Ladekontaktvorrichtung (12) die jeweiligen Hochachsen (29, 40) in einer gemeinsamen Flucht positioniert.

5. Schnellladesystem nach Anspruch 3 oder 4,
**dadurch gekennzeichnet,**
**dass** die Kontaktelemente (17) und/oder die Ladekontaktelemente (18) so ausgebildet sind, dass der Berührungskontakt der Kontaktelemente mit der Ladekontaktvorrichtung (12) unterbunden wird, wenn die jeweiligen Hochachsen (29, 40) um einen Winkel α von
> 2°, bevorzugt > 5°, besonders bevorzugt > 10° abweichend von einer gemeinsamen Flucht positioniert sind.

6. Schnellladesystem nach einem der vorangehenden Ansprüche,
**dadurch gekennzeichnet,**
**dass** der Kontaktelementträger (14) zwei, vorzugsweise drei Positionierflächen (30) ausbildet, die geometrisch übereinstimmend mit Anlageflächen (25) der Ladekontaktvorrichtung (12) zur Anlage des Kontaktelementträgers ausgebildet sind.

7. Schnellladesystem nach einem der vorangehenden Ansprüche,
**dadurch gekennzeichnet,**
**dass** der Abstandshalter (37) in Richtung einer Längsachse (39) der Kontaktvorrichtung (11) oder der Ladekontaktvorrichtung (12) und sich entlang der Positionierfläche (30) der Kontaktvorrichtung oder der Anlagefläche (25) der Ladekontaktvorrichtung erstreckend ausgebildet ist.

8. Schnellladesystem nach einem der vorangehenden Ansprüche,
**dadurch gekennzeichnet,**
**dass** die Abstandseinrichtung (35) an einem der Ladekontaktvorrichtung (12) zugewandten Ende (28) der Kontaktvorrichtung (11) oder an einem der Kontaktvorrichtung zugewandten Ende (45) der Ladekontaktvorrichtung (12) angeordnet ist.

9. Schnellladesystem nach einem der vorangehenden Ansprüche,
**dadurch gekennzeichnet,**
**dass** die Ladekontaktvorrichtung (12) und/oder die Kontaktvorrichtung (11) eine Aufnahmeausnehmung (27) der Führungsvorrichtung (36) für die Abstandseinrichtung (35) in der Kontaktposition aufweist.

10. Schnellladesystem nach einem der vorangehenden Ansprüche,
**dadurch gekennzeichnet,**
**dass** die Kontaktvorrichtung (11) auf einem Fahrzeugdach und die Ladekontaktvorrichtung (12) an einer stationären Ladestation oder umgekehrt anordbar ist.

11. Schnellladesystem nach einem der vorangehenden Ansprüche,
**dadurch gekennzeichnet,**
**dass** die Ladekontaktvorrichtung (12) einen Ladekontaktelementträger (19) mit Ladekontaktelementen (18) aufweist.

12. Schnellladesystem nach Anspruch 12,
**dadurch gekennzeichnet,**
**dass** der Ladekontaktelementträger (19) eine Aufnahmeöffnung (22) für den Kontaktelementträger (14) ausbildet, wobei der Kontaktelementträger in die Aufnahmeöffnung des Ladekontaktelementträgers einsetzbar ist.

13. Schnellladesystem nach Anspruch 13,
**dadurch gekennzeichnet,**
**dass** die Aufnahmeöffnung (22) bei einem Zusammenführen von Kontaktelementträger (14) und Ladekontaktelementträger (18) eine Führung für den Kontaktelementträger ausbildet.

14. Schnellladesystem nach einem der Ansprüche 12 bis 14,
**dadurch gekennzeichnet,**
**dass** der Ladekontaktelementträger (19) als eine in einer Fahrtrichtung des Fahrzeuges anordbare, dachförmige Längsschiene ausgebildet ist, wobei die Ladekontaktelemente (18) als Leiterstreifen (20) ausgebildet sind.

15. Schnellladesystem nach einem der vorangehenden Ansprüche,
**dadurch gekennzeichnet,**
**dass** die Kontaktelemente (17) bolzenförmig ausgebildet sind, wobei die Kontaktelemente am Kontaktelementträger (14) federnd gelagert sind.

16. Schnellladesystem nach einem der vorangehenden Ansprüche,
**dadurch gekennzeichnet,**
**dass** die Positioniervorrichtung (13) einen Pantografen oder eine Schwinge umfasst, mittels der die Kontaktvorrichtung (11) in vertikaler Richtung relativ zur Ladekontaktvorrichtung (12) positionierbar ist.

17. Schnellladesystem nach einem der vorangehenden Ansprüche,
**dadurch gekennzeichnet,**
**dass** die Positioniervorrichtung (13) eine Querführung aufweist, mittels der der Kontaktelementträger (14) relativ quer zur Ladekontaktvorrichtung (12) positionierbar ist, wobei der Kontaktelementträger frei verschieblich an der Querführung angeordnet ist.

18. Verfahren zur Ausbildung einer elektrisch leitenden Verbindung zwischen einem Fahrzeug und einer stationären Ladestation, insbesondere für ein Schnellladesystem (10) für elektrisch angetriebene Fahrzeuge, wie Elektrobusse oder dergleichen, mit einer Kontaktvorrichtung (11), einer Ladekontaktvorrichtung (12) und einer Positioniervorrichtung (13), wobei mit der Kontaktvorrichtung die Ladekontaktvorrichtung in einer Kontaktposition elektrisch kontaktiert wird, wobei mittels der Positioniervorrichtung die Kontaktvorrichtung relativ zur Ladekontaktvorrichtung in vertikaler und horizontaler Richtung positioniert und in die Kontaktposition gebracht wird, wobei Kontaktelemente (17) eines Kontaktelementträgers (14) der Kontaktvorrichtung in der Kontaktposition mit Ladekontaktelementen (18) der Ladekontaktvorrichtung jeweils zur Ausbildung von Kontaktpaarungen elektrisch kontaktiert werden, wobei eine Führungsvorrichtung (36) des Schnellladesystems die Kontaktvorrichtung oder die Ladekontaktvorrichtung in die Kontaktposition führt, wobei bei einem Zusammenführen von Kontaktvorrichtung und Ladekontaktvorrichtung ein Berührungskontakt der Kontaktelemente mit der Ladekontaktvorrichtung vor einem Erreichen der Kontaktposition mittels der Führungsvorrichtung unterbunden wird, wobei die Führungsvorrichtung eine an der Kontaktvorrichtung und/oder der Ladekontaktvorrichtung angeordnete Abstandseinrichtung (35) aufweist,
**dadurch gekennzeichnet,**
**dass** ein Abstandshalter (37) mit zumindest einer Rolle (38) der Abstandseinrichtung an einer Positionierfläche (30) der Kontaktvorrichtung oder einer Anlagefläche (25) der Ladekontaktvorrichtung abwälzt.

## Claims

1. A rapid charging system (10) for electrically driven vehicles, in particular electric busses or similar, for realizing an electrically conductive connection between a vehicle and a stationary charging station having a contacting device (11), a charging contact device (12) and a positioning device (13), said contacting device (11) or said charging contact device (12) being able to be arranged on a vehicle, said charging contact device (12) being able to be electrically contacted using the contacting device (11) when in a contacting position, said contacting device (11) being able to be positioned in a vertical and horizontal direction with respect to the charging contact device (12) and be moved into the contacting position by means of the positioning device (13), said contacting device (11) comprising a contacting element carrier (14) having contacting elements (17), said contacting elements (17) being able to be electrically contacted with charging contact elements (18) of the charging contact device (12) to form contact pairings when in the contacting position, said rapid charging system (10) comprising a guiding device (36) for guiding the contacting device (11) or the charging contact device (12) into the contacting position,, the guiding device (36) being designed such that when the contacting device (11) and the charging contact device (12) are being joined, a physical contact between the contacting elements (17) and the charging contact device (12) is prevented before the contacting position is attained, the guiding device (36) comprising a spacing means (35) which is arranged on the contacting device (11) and/or the charging contact device (12),
**characterized in that**
the spacing means (35) comprises a spacer (37) having at least one roll (38) which can be rolled on a positioning surface (30) of the contacting device or an abutment surface (25) of the charging contact device (12).

2. The rapid charging system according to claim 1,
**characterized in that**
the contacting device (11) and the charging contact device (12) each comprise a vertical axis (29, 40), the respective vertical axes (29, 40) aligning flush when in the contacting position.

3. The rapid charging system according to claim 2,
**characterized in that**
the physical contact between the contacting elements (17) and the charging contact device (12) is prevented if the respective vertical axes (29, 40) are positioned so as to deviate from a shared alignment.

4. The rapid charging system according to claim 2 or 3,
**characterized in that**
the guiding device (36) positions the respective vertical axes (29, 40) in a shared alignment when the contacting device (11) and the charging contact device (12) are being joined.

5. The rapid charging system according to claim 3 or 4,
**characterized in that**
the contacting elements (17) and/or the charging contact elements (18) are designed such that the physical contact between the contacting elements and the charging contact device (12) is prevented if the respective vertical axes (29, 40) are positioned so as to deviate from a shared alignment by an angle α of > 2°, preferably > 5°, particularly preferably > 10°.

6. The rapid charging system according to any one of the preceding claims,
**characterized in that**
the contacting element carrier (14) forms two, preferably three, positioning surfaces (30) which are designed so as to coincide geometrically with abutment surfaces (25) of the charging contact device (12) for abutting the contacting element carrier.

7. The rapid charging system according to any one of the preceding claims,
**characterized in that**,
the spacer (37) is designed in the direction of a longitudinal axis (39) of the contacting device (11) or the charging contact device (12) and to extend along the positioning surface (30) of the contacting device or along the abutment surface (25) of the charging contact device.

8. The rapid charging system according to any one of the preceding claims,
**characterized in that**
the spacing means (35) is arranged on an end (28) of the contacting device (11) facing towards the charging contact device (12) or on an end (45) of the charging contact device (12) facing towards the contacting device.

9. The rapid charging system according to any one of the preceding claims,
**characterized in that**
the charging contact device (12) and/or the contacting device (11) comprise(s) a receptacle recess (27) of the guiding device (36) for the spacing means (35) when in the contacting position.

10. The rapid charging system according to any one of the preceding claims,
**characterized in that**
the contacting device (11) can be arranged on a vehicle roof and the charging contact device (12) can be arranged on a stationary charging station or vice versa.

11. The rapid charging system according to any one of the preceding claims,
**characterized in that**
the charging contact device (12) comprises a charging contact element carrier (19) having charging contact elements (18).

12. The rapid charging system according to claim 12,
**characterized in that**
the charging contact element carrier (19) forms a receptacle opening (22) for the contacting element carrier (14), said contacting element carrier being able to be inserted into the receptacle opening of the charging contact element carrier.

13. The rapid charging system according to claim 13,
**characterized in that**
the receptacle opening (22) forms a guide for the contacting element carrier when the contacting element carrier (14) and the charging contact element carrier (19) are being joined.

14. The rapid charging system according to any one of the claims 12 to 14,
**characterized in that**
the charging contact element carrier (19) is designed as a roof-shaped longitudinal rail which can be arranged in a moving direction of the vehicle, the charging contact elements (18) being designed as conductor strips (20).

15. The rapid charging system according to any one of the preceding claims,
**characterized in that**
the contacting elements (17) are formed in the shape of bolts, said contacting elements being resiliently mounted on the contacting element carrier (14).

16. The rapid charging system according to any one of the preceding claims,
**characterized in that**
the positioning device (13) comprises a pantograph or a rocker by means of which the contacting device (11) can be positioned in a vertical direction with respect to the charging contact device (12).

17. The rapid charging system according to any one of the preceding claims,
**characterized in that**
the positioning device (13) comprises a crossbeam by means of which the contacting element carrier (14) can be positioned relatively transversely to the charging contact device (12), said contacting element carrier being arranged on the crossbeam so as to be freely displaceable.

18. A method for forming an electrically conductive connection between a vehicle and a stationary charging station, in particular for a rapid charging system (10) for electrically driven vehicles, such as electric busses or similar, having a contacting device (11), a charging contact device (12) and a positioning device (13), said charging contact device being electrically contacted using the contacting device when in a contacting position, said contacting device being positioned in a vertical and horizontal direction with respect to the charging contact device and being moved into the contacting position by means of the positioning device, contacting elements (17) of a contacting element carrier (14) of the contacting device being electrically contacted with charging contact elements (18) of the charging contact device to form contact pairings when in the contacting position, a guiding device (36) of the rapid charging system guiding the contacting device or the charging contact device into the contacting position, when the contacting device and the charging contact device are being joined, a physical contact between the contacting elements and the charging contact device being prevented by means of the guiding device before the contacting position is attained, the guiding device comprising a spacing means (35) which is arranged on the contacting device and/or the charging contact device
**characterized in that**
a spacer (37) is rolled with at least one roll (38) of the spacing means on a positioning surface (30) of the contacting device or an abutment surface (25) of the charging contact device.

## Revendications

1. Système de chargement rapide (10) pour des véhicules à propulsion électrique, notamment des bus électriques ou similaire, pour former une liaison électriquement conductrice entre un véhicule et une station de chargement stationnaire, ayant un dispositif de contact (11), un dispositif de contact de charge (12) et un dispositif de positionnement (13), le dispositif de contact (11) ou le dispositif de contact de charge (12) pouvant être disposé sur un véhicule, le dispositif de contact de charge (12) pouvant être contacté électriquement au moyen du dispositif de contact (11) lorsqu'ils sont dans une position de contact, le dispositif de contact (11) pouvant être positionné dans la direction verticale et horizontale par rapport au dispositif de contact de charge (12) et pouvant être mis dans la position de contact au moyen du dispositif de positionnement (13), le dispositif de contact (11) comprenant un support d'éléments de contact (14) ayant des éléments de contact (17), chaque élément de contact (17) pouvant être contacté électriquement avec un élément de contact de charge (18) du dispositif de contact de charge (12) pour former un paire de contact lorsque ledit dispositif de contact de charge (12) et ledit dispositif de contact (11) sont dans la position de contact, le système de chargement rapide (10) ayant un dispositif de guidage (36) pour guider le dispositif de contact (11) ou le dispositif de contact de charge (12) dans la position de contact, le dispositif de guidage (36) étant réalisé de telle sorte qu'un contact entre les éléments de contact (17) et le dispositif de contact de charge (12) est empêché avant qu'une position de contact soit atteinte lorsque le dispositif de contact (11) et le dispositif de contact de charge (12) sont en train d'être joints, le dispositif de guidage (36) ayant un dispositif d'espacement (35) disposé sur le dispositif de contact (11) et/ou sur le dispositif de contact de charge (12),
**caractérisé en ce que**
le dispositif d'espacement (35) a une entretoise (37) ayant au moins une roulette (38) qui peut être roulée sur une surface de positionnement (30) du dispositif de contact ou sur une surface d'appui (25) du dispositif de contact de charge (12).

2. Système de chargement rapide selon la revendication 1,
**caractérisé en ce que**
le dispositif de contact (11) et le dispositif de contact de charge (12) comprennent chacun un axe vertical (29, 40), les respectifs axes verticaux (29, 40) s'alignant lorsque ledit dispositif de contact de charge (12) et ledit dispositif de contact (11) sont dans la position de contact.

3. Système de chargement rapide selon la revendication 2,
**caractérisé en ce que**
le contact entre les éléments de contact (17) et le dispositif de contact de charge (12) est empêché lorsque les respectifs axes verticaux (29, 40) sont positionnés de manière déviante d'un alignement commun.

4. Système de chargement rapide selon la revendication 2 ou 3,
**caractérisé en ce que**
le dispositif de guidage (36) positionne les respectifs axes verticaux (29, 40) dans un alignement commun lorsque le dispositif de contact (11) et le dispositif de contact de charge (12) sont en train d'être joints.

5. Système de chargement rapide selon la revendication 3 ou 4,
**caractérisé en ce que**
les éléments de contact (17) et/ou les éléments de contact de charge (18) sont réalisés de telle sorte que le contact entre les éléments de contact et le dispositif de contact de charge (12) est empêché lorsque les respectifs axes verticaux (29, 40) sont positionnés de manière déviante d'un alignement commun par un angle α de > 2°, de préférence de > 5°, de préférence particulière de > 10°.

6. Système de chargement rapide selon l'une quelconque des revendications précédentes,
**caractérisé en ce que**
le support d'éléments de contact (14) forme deux, de préférence trois, surfaces de positionnement (30) qui sont réalisés de manière à coïncider géométriquement avec les surfaces d'appui (25) du dispositif de contact de charge (12) pour l'appui du support d'éléments de contact.

7. Système de chargement rapide selon l'une quelconque des revendications précédentes,
**caractérisé en ce que**
l'entretoise (37) est formée dans la direction d'un axe longitudinal (39) du dispositif de contact (11) ou du dispositif de contact de charge (12) et s'étendant le long de la surface de positionnement (30) du dispositif de contact ou de la surface d'appui (25) du dispositif de contact de charge.

8. Système de chargement rapide selon l'une quelconque des revendications précédentes,
**caractérisé en ce que**
le dispositif d'espacement (35) est disposé sur une extrémité (28) du dispositif de contact (11) faisant face au dispositif de contact de charge (12) ou sur une extrémité (45) du dispositif de contact de charge (12) faisant face au dispositif de contact.

9. Système de chargement rapide selon l'une quelconque des revendications précédentes,
**caractérisé en ce que**
le dispositif de contact de charge (12) et/ou le dispositif de contact (11) ont/a un évidement de réception (27) du dispositif de guidage (36) pour le dispositif d'espacement (35) lorsqu'ils sont dans la position de contact.

10. Système de chargement rapide selon l'une quelconque des revendications précédentes,
**caractérisé en ce que**
le dispositif de contact (11) peut être disposé sur un toit de véhicule et le dispositif de contact de charge (12) peut être disposé sur une station de chargement stationnaire ou inversement.

11. Système de chargement rapide selon l'une quelconque des revendications précédentes,
**caractérisé en ce que**
le dispositif de contact de charge (12) a un support d'éléments de contact de charge (19) ayant des éléments de contact de charge (18).

12. Système de chargement rapide selon la revendication 12,
**caractérisé en ce que**
le support d'éléments de contact de charge (19) forme une ouverture de réception (22) pour le support d'éléments de contact (14), le support d'éléments de contact (14) pouvant être inséré dans l'ouverture de réception du support d'éléments de contact de charge.

13. Système de chargement rapide selon la revendication 13,
**caractérisé en ce que**
l'ouverture de réception (22) forme un guidage pour le support d'éléments de contact lorsque le support d'éléments de contact (14) et le support d'éléments de contact de charge (19) sont en train d'être joints.

14. Système de chargement rapide selon l'une quelconque des revendications 12 à 14,
**caractérisé en ce que**
le support d'éléments de contact de charge (19) est réalisé comme un rail longitudinal en forme de toit qui peut être disposé dans le sens de marche du véhicule, les éléments de contact de charge (18) étant réalisés comme bandes conductrices (20).

15. Système de chargement rapide selon l'une quelconque des revendications précédentes,
**caractérisé en ce que**
les éléments de contact (17) sont réalisés en forme de boulon, les éléments de contact étant montés élastiquement sur le support d'éléments de contact (14).

16. Système de chargement rapide selon l'une quelconque des revendications précédentes,
**caractérisé en ce que**
le dispositif de positionnement (13) comprend un pantographe ou un bras oscillant au moyen duquel le dispositif de contact (11) peut être positionné dans la direction verticale par rapport au dispositif de contact de charge (12).

17. Système de chargement rapide selon l'une quelconque des revendications précédentes,
**caractérisé en ce que**
le dispositif de positionnement (13) a un guidage transversal au moyen duquel le support d'éléments de contact (14) peut être positionné de manière transversale par rapport au dispositif de contact de charge (12), le support d'éléments de contact étant disposé de manière librement déplaçable sur le guidage transversal.

18. Procédé pour former une liaison électriquement conductrice entre un véhicule et une station de chargement stationnaire, notamment pour un système de chargement rapide (10) pour des véhicules à propulsion électrique, comme des bus électriques ou similaire, ayant un dispositif de contact (11), un dispositif de contact de charge (12) et un dispositif de positionnement (13), le dispositif de contact de charge (12) étant contacté électriquement au moyen du dispositif de contact (11) lorsqu'ils sont dans une position de contact, le dispositif de contact étant positionné dans la direction verticale et horizontale par rapport au dispositif de contact de charge et étant mis dans la position de contact au moyen du dispositif de positionnement, des éléments de contact (17) d'un support d'éléments de contact (14) du dispositif de contact étant contactés électriquement avec des éléments de contact de charge (18) du dispositif de contact de charge pour former des paires de contact lorsque ledit dispositif de contact de charge (12) et ledit dispositif de contact (11) sont dans la position de contact, un dispositif de guidage (36) du système de chargement rapide guidant le dispositif de contact ou le dispositif de contact de charge dans la position de contact, un contact entre les éléments de contact et le dispositif de contact de charge étant empêché avant qu'une position de contact soit atteinte au moyen du dispositif de guidage lorsque le dispositif de contact et le dispositif de contact de charge sont en train d'être joints, le dispositif de guidage ayant un dispositif d'espacement (35) disposé sur le dispositif de contact et/ou sur le dispositif de contact de charge,
**caractérisé en ce qu'**
une entretoise (37) est roulée avec au moins une roulette (38) du dispositif d'espacement sur une surface de positionnement (30) du dispositif de contact ou sur une surface d'appui (25) du dispositif de contact de charge.
